# EUROPÄISCHE PATENTSCHRIFT

(11) **EP 2 442 933 B1**
(45) Veröffentlichungstag und Bekanntmachung des Hinweises auf die Patenterteilung: **12.08.2015**
(21) Anmeldenummer: 10744679.1
(22) Anmeldetag: 15.06.2010
(51) Int. Cl.: B23G 5/18, B23G 7/02, B23B 51/00, B23C 5/10

(54) **WERKZEUG ZUR BEARBEITUNG VON WERKSTÜCKEN**
TOOL FOR MACHINING WORKPIECES
OUTIL POUR USINAGE DE PIÈCES À USINER

(30) Priorität: 16.06.2009 DE 102009029715
(43) Veröffentlichungstag der Anmeldung: 25.04.2012
(73) Patentinhaber: Komet Group GmbH, 70565 Stuttgart (DE)
(72) Erfinder: DURST, Gabriele, 71116 Gärtringen (DE)
(74) Vertreter: Jackisch-Kohl, Anna-Katharina
(86) Internationale Anmeldenummer: PCT/EP2010/003582
(87) Internationale Veröffentlichungsnummer: WO 2010/145801

(56) Entgegenhaltungen:
- WO-A1-03/010350
- WO-A1-2009/037094
- JP-A- 2000 043 006
- US-A1- 2003 118 413

## Beschreibung

Die Erfindung betrifft ein Werkzeug zur Bearbeitung von Werkstücken nach dem Oberbegriffes Anspruches 1. Ein solches Werkzeug ist aus JP 2000 043006 A bekannt.

Bei bekannten Werkzeugen dieser Art sind der Arbeits- und ein Einspannteil aus denselben Materialien, nämlich einem zähen Kernmaterial und einem harten, verschleißfesten Außenmantel hergestellt. Die Herstellung dieser Werkstücke ist aufwändig und teuer. Zudem werden die unterschiedlichen Werkstoffe auch dort eingesetzt, wo sie gar nicht benötigt werden.

Der Erfindung liegt die Aufgabe zugrunde, ein derartiges Werkzeug so auszubilden, dass es auf einfache und kostengünstige Weise bei hoher Verschleißfestigkeit des Arbeitsteiles und ausreichender Elastizität des Einspannteiles ausgebildet werden kann.

Diese Aufgabe wird bei einem Werkzeug der gattungsbildenden Art erfindungsgemäß mit den kennzeichnenden Merkmalen des Anspruches 1 gelöst.

Infolge der erfindungsgemäßen Ausbildung besteht der Arbeitsteil aus dem verschleißfesten Material, dessen Wolframcarbid eine Korngröße aufweist, die im Bereich zwischen etwa 0,2 bis etwa 0,5 µm liegt. Der Einspannteil des erfindungsgemäßen Werkzeuges besteht aus dem zähen Werkstoff mit Wolframcarbid, das eine Korngröße im Bereich zwischen etwa 0,8 bis etwa 1,3 µm aufweist.. Der Arbeitsteil und der Einspannteil gehen über einen Übergangsbereich ineinander über, der eine entsprechende axiale Länge aufweist und in dem sich das Mischungsverhältnis zwischen verschleißfestem und zähem Wolframcarbid etwa stetig ändert. So nimmt der Anteil des verschleißfesten Wolframcarbids in Richtung auf den Einspannteil bis auf 0 ab, während der Anteil des zähen Wolframcarbids des Einspanhteiles in Richtung auf den Arbeitsteil bis auf 0 abnimmt. Diesem Übergangsbereich zwischen dem Arbeitsteil und dem Einspannteil kommt insbesondere hinsichtlich der radialen Belastbarkeit des Kompositmaterials hohe Bedeutung zu. Der Übergangsbereich wird so ausgebildet, dass ein allmählicher Übergang vom verschleißfesten in den zähen Werkstoff stattfindet. Dabei befinden sich im Übergangsbereich beide Werkstoffarten, wobei der Anteil des verschleißfesten Materials des Arbeitsteiles in Richtung auf den Einspannteil allmählich abnimmt, bis er im Einspannteil den Wert 0 hat. Umgekehrt erfolgt im Übergangsbereich eine etwa stetige Abnahme des Anteils an zähem Werkstoff vom Einspannteil in Richtung auf den Arbeitsteil, in dem der Anteil an diesem zähen Werkstoff dann 0 ist. Beim erfindungsgemäßen Werkzeug wird somit gezielt Einfluss auf die Ausbildung des Übergangsbereiches genommen, so dass je nach Werkzeug unterschiedliche Eigenschaften des Übergangsbereiches gezielt eingestellt werden können.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher erläutert. Es zeigt
- Fig. 1 bis Fig. 3: jeweils im Axialschnitt eine andere Ausführungsform eines als Former ausgebildeten erfindungsgemäßen Werkzeuges mit einem Arbeits- und einem Einspannteil,
- Fig. 4 und Fig. 5: jeweils ein anderes, als Fräser ausgebildetes erfindungsgemäßes Werkzeug in einer Darstellung gemäß Fig. 1,
- Fig. 6: eine Darstellung entsprechend Fig. 1 mit einem erfindungsgemäßen Werkzeug, das als Bohrer ausgebildet ist,
- Fig. 7: in einem Diagramm den Härteverlauf eines erfindungsgemäßen Werkzeuges in einem Übergangsbereich zwischen einem Anschnittabschnitt und einem Führungsabschnitt,
- Fig. 8 bis Fig. 10: jeweils in einer Darstellung entsprechend Fig. 1 weitere Ausführungsformen von erfindungsgemäßen Werkzeugen,
- Fig. 11: in einem Diagramm den Verlauf der Korngrößenverteilung des Wolframcarbids über die Länge des Werkzeuges.

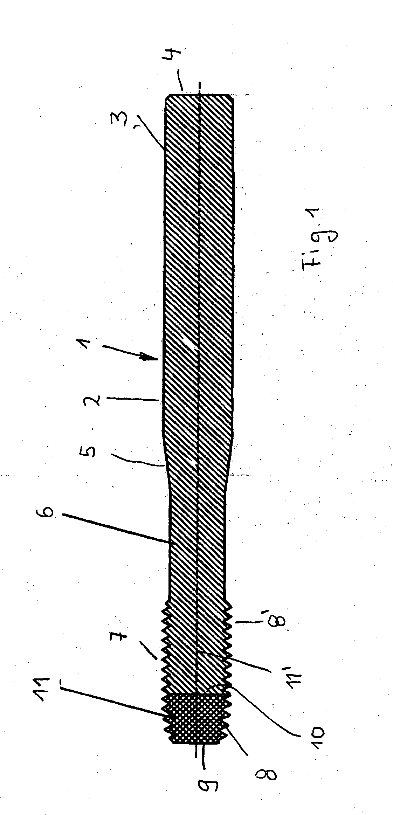

Die in den Fig. 1 bis 3 dargestellten Werkzeuge sind Gewindeformer, die zur spanlosen Herstellung von Innengewinden dienen.

Der Gewindeformer 1 nach Fig. 1 hat einen Einspannteil 2, der einen zylindrischen Schaft 3 aufweist, mit dem er in einer Werkzeugaufnahme eingespannt werden kann. Am Schaftende 4 kann der Schaft 3 zur verdrehsicheren Einspannung mit einer (nicht dargestellten) Profilierung versehen sein. Der Schaft 3 erstreckt sich im Ausführungsbeispiel über etwas mehr als die halbe Werkzeuglänge und geht über einen sich kegelförmig verjüngenden Zwischenabschnitt 5 in einen vorzugsweise zylindrischen Halsabschnitt 6 des Einspannteiles 2 über. Der Halsabschnitt 6 verbindet den Zwischenabschnitt 5 mit einem Arbeitsteil 7. Er hat einen Anschnittabschnitt 11 und einen Führungsabschnitt 11'. Der Anschnittabschnitt 11 hat Schneiden 8, deren Durchmesser in Richtung auf den Führungsabschnitt 11' zunimmt, dessen Schneiden 8' konstanten Durchmesser haben. Die Stirnseite 9 des Anschnittabschnittes 11 ist eben und verläuft senkrecht zur Längsachse des Gewindeformers 1.

Der Einspannteil 2 mit dem Schaft 3, dem Zwischenabschnitt 5, dem Halsabschnitt 6 und dem Führungsabschnitt 11' besteht aus einem zähen Werkstoff, der Wolframcarbid mit einem Kobaltgehalt von etwa 15 Gew.-% ist. Der Anschnittabschnitt 11 hingegen besteht aus dem verschleißfesten Wolframcarbid mit reduziertem Kobaltgehalt.

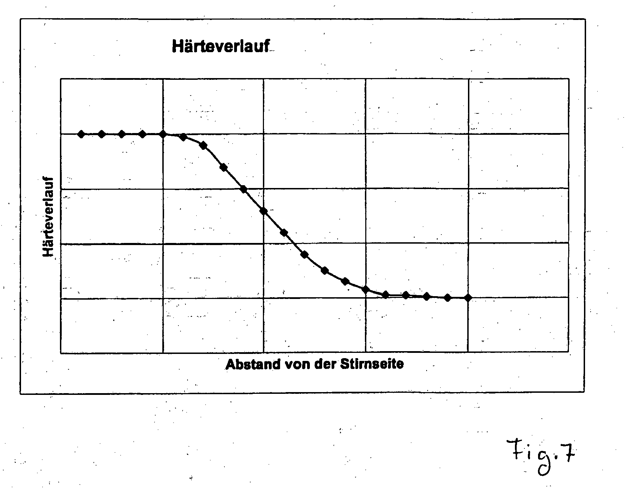

Das Werkzeug 1 wird aus den beiden Werkstoffen im Sinterverfahren hergestellt. Während des Siriterprozesses findet am Übergang zwischen den beiden Werkstoffarten, in Fig 1 durch die Linie 10 gekennzeichnet, eine Art Diffusion statt. Dies äußert sich darin, dass die Härte des Werkzeuges am Übergang vom Anschnittabschnitt 11 zum Führungsabschnitt 11' stetig abnimmt. Fig. 7 zeigt den Härteverlauf in Abhängigkeit vom Abstand von der Stirnseite 9. Erkennbar ist, dass der Anschnittabschnitt 11 aufgrund des verschleißfesten Materials wesentlich größere Härte hat als der Führungsabschnitt 11' und der restliche Teil des Werkzeuges 1.

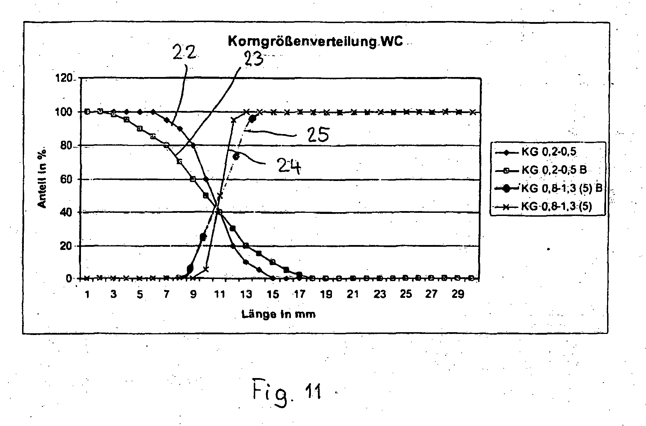

Außerdem ist der Übergangsbereich 10 infolge der Diffusionsvorgänge durch eine abnehmende Konzentration des einen Werkstoffes und eine zunehmende Konzentration des anderen Werkstoffes gekennzeichnet, was anhand von Fig. 11 noch im Einzelnen beschrieben werden wird.

Die beschriebene Ausbildung des Werkzeuges 1 im Übergangsbereich 10 gewährleistet, dass auch bei starker Erwärmung des Werkzeugs während seines Einsatzes keine Spannungsspitzen im Übergangsbereich aufgrund der unterschiedlichen Werkstoffe auftreten, die zu einer Beschädigung des Werkzeuges 1 führen könnten.

Die Schneiden 8' des Führungsabschnittes 11' können anstelle eines gleichen Durchmessers auch einen in Richtung auf den Einspannteil 2 abnehmenden Durchmesser aufweisen. Da das Werkzeug 1 mit dem Führungsabschnitt 11' nur noch eine Führungsfunktion ausübt, ist es nicht nachteilig, dass es nicht aus verschleißfestem, sondern aus zähem Werkstoff besteht.

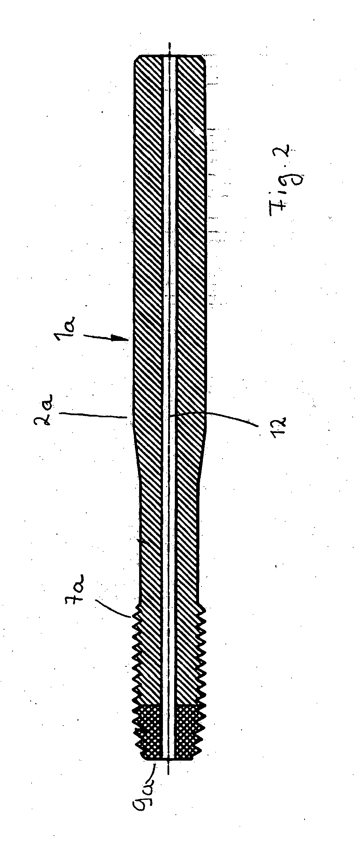

Das Werkzeug 1 a nach Fig. 2 unterscheidet sich vom Werkzeug 1 nur dadurch, dass es einen zentralen Längskanal 12 hat, der sich über die ganze Länge des Werkzeuges 1 a, also dessen Einspannteil 2a und dessen Arbeitsteil 7a erstreckt: Der Längskanal 12 dient zur Zuführung von Kühlmedium während des Bearbeitungsvorganges und mündet in die Stirnseite 9a.

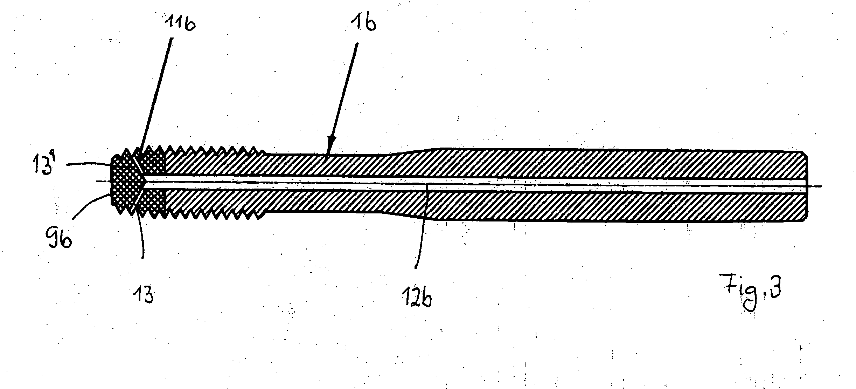

Beim Werkzeug 1b gemäß Fig. 3 mündet der Längskanal 12b nicht in die Stirnseite 9b. Vom Ende des Längskanals 12b zweigen im Folgenden als Querkanäle 13, 13' bezeichnete Kühtbohrungsaustritte ab, die sich unter einem beliebigen Austrittswinkel in Richtung auf die Stirnseite 9b erstrecken und in die Außenseite des Anschnittabschnittes 11 b münden. Im Übrigen ist das Werkzeug 1 b gleich ausgebildet wie das Werkzeug 1 a gemäß Fig. 2.

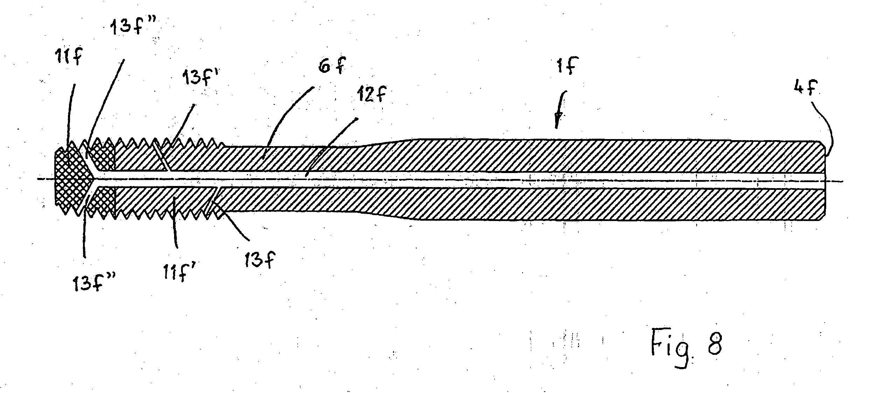

Das Werkzeug 1f gemäß Fig. 8 hat ähnlich der Ausführungsform gemäß Fig. 3 einen zentralen Längskanal 12f, der sich vom Schaftende 4f aus mittig axial bis in den Anschnittabschnitt 11f erstreckt. Vom zentralen Längskanal 12f aus zweigen die Querkanäle 13f, 13f', 13f" ab. Diese Querkanäle liegen in unterschiedlichen Bereichen des Werkzeuges. Der Querkanal 13f liegt in Höhe des Führungsabschnittes 11f' nahe am Übergang zum Halsabschnitt 6f. Der Querkanal 13f' liegt mit axialem Abstand zum Querkanal 13f und mündet ebenfalls in die Außenseite des Führungsabschnittes 11f'. Die Querkanäle 13f, 13f' haben vorteilhaft gleichen Durchmesser. Die Querkanäle 13f" hingegen befinden sich im Anschnittabschnitt 11f und haben vorteilhaft größeren Querschnitt als die Querkanäle 13f, 13f'.

Durch die in unterschiedlichen Ebenen angeordneten Querkanäle 13f, 13f', 13f" ist es möglich, gezielt Kühlmedium in der erforderlichen Menge zuzuführen. So wird im Schneidbereich, das heißt im Bereich des Anschnittabschnittes 11 f, mehr Kühlschmierstoff benötigt als im Bereich des Führungsabschnittes 11f'. Darum sind, wie Fig. 8 beispielhaft zeigt, die Querkanäle 13f" mit größerem Querschnitt versehen als die Querkanäle 13f, 13f'.

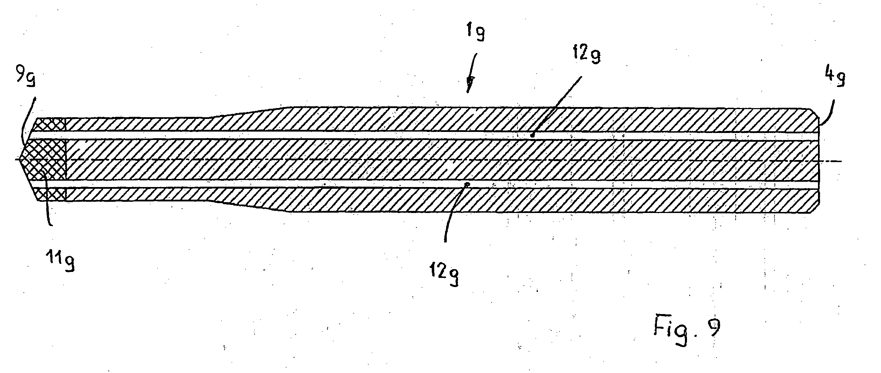

Darüber hinaus können die Querkanäle 13f, 13f', 13f" in unterschiedlicher Verteilung vorgesehen sein, wodurch ebenfalls die Zufuhr von Kühlschmiermedium an die jeweiligen Erfordernisse angepasst werden kann. Das Werkzeug 1g nach Fig. 9 weist zwei Längskanäle 12g auf, die sich vom Schaftende 4g achsparallel über die gesamte Länge des Werkzeuges erstrecken und entsprechend der Ausführungsform gemäß Fig. 2 in die Stirnseite 9g des Anschnittabschnittes 11g münden. Die beiden Längskanäle 12g verlaufen vorzugsweise parallel zueinander und liegen außermittig innerhalb des Werkzeuges 1g. Die außermittigen Längskanäle 12g sind vorteilhaft im Bereich von (nicht dargestellten) Wangen angeordnet, die benachbarte Spannuten des Werkzeuges 1g voneinander trennen. Die Zahl der Längskanäle 12g entspricht vorteilhaft der Zahl der Spannuten des Werkzeuges 1 g. Die außermittigen Längskanäle können auch mit unterschiedlichen Abständen von der Mitte des Werkzeugs angeordnet sein und von einer mittennahem zu einer von der Mitte entfernteren Position angeordnet sein.

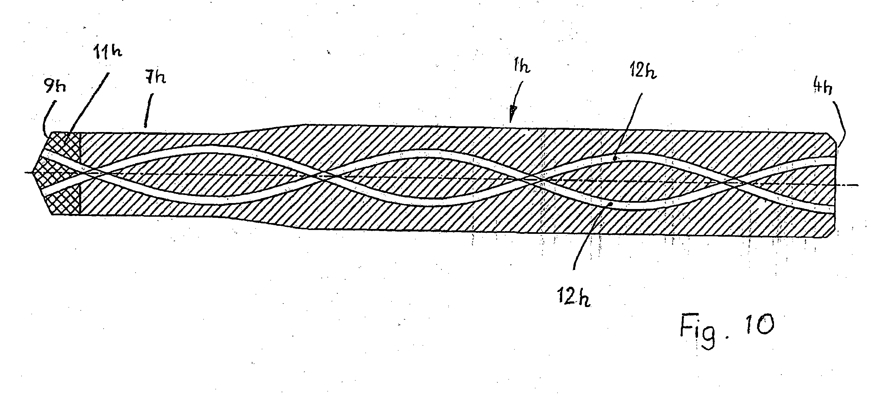

Das Werkzeug 1 h gemäß Fig. 10 hat Längskanäle 12h, die sich vom Schaftende 4h aus bis zur Stirnseite 9h des Anschnittabschnittes 11h erstrecken. Die Längskanäle 12h verlaufen wendelförmig über die Länge des Werkstückes 1h. Diese wendetförmige Gestaltung der Längskanäle 12h wird bei Werkzeugen eingesetzt, deren Arbeitsteil 7h gewendelt ausgebildet ist, also mit gewendelten Spannuten und dazwischenliegenden, längs Wendeln verlaufender Schneiden versehen ist. Auch in diesem Fall beträgt die Zahl der Längskanäle 12h vorteilhaft der Zahl der Spannuten.

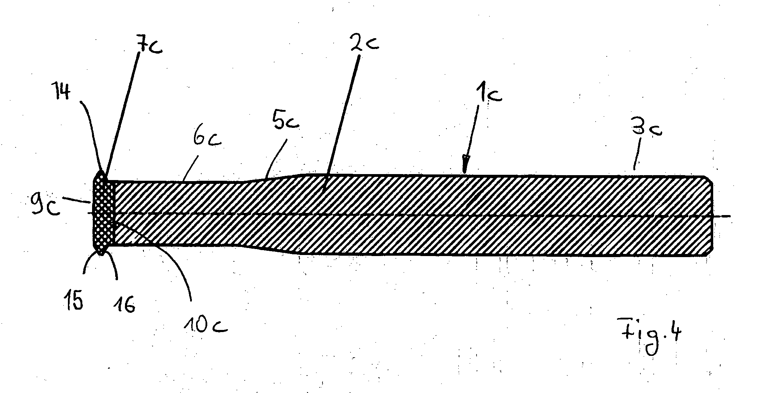

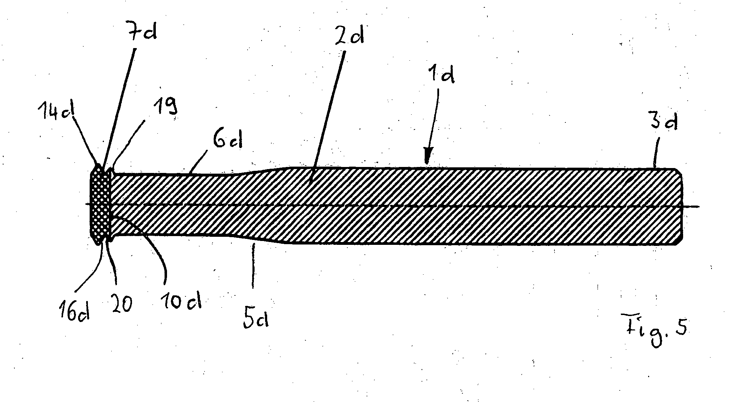

Die Fig. 4 und 5 zeigen Gewindefräser bzw. Profilfräser mit einer Teilung, die sich im verschleißfesten Werkstoff befindet.

Das Werkzeug 1 c nach Fig. 4 hat wie die zuvor beschriebenen Werkzeuge den Einspannteil 2c und den Arbeitsteil 7c. Der Arbeitsteil 7c besteht wiederum aus verschleißfestem Werkstoff, während der Einspannteil 2c aus dem zähen Werkstoff hergestellt ist. Der Einspannteil 2c hat den Einspannschaft 3c, den Zwischenabschnitt 5c und den Halsabschnitt 6c, der bis zum Arbeitsteil 7c reicht. Der Arbeitsteil 7c hat einen in einer Radialebene liegenden umlaufenden Schneidzahn 14. Seine vordere Zahnflanke 15 schließt an die ebene Stirnseite 9c an, während die rückwärtige Zahnflanke 16 an den Halsabschnitt 6c anschließt.

Wie durch die Linie 10c angedeutet, liegt der Übergangsbereich vom zähen zum verschleißfesten Werkstoff im Bereich des Halsabschnittes 6c. Wie bei den Gewindeformern gemäß den Fig. 1 bis 3 erfolgt der Übergang zwischen den beiden unterschiedlichen Werkstoffen über einen axialen Bereich, wie anhand von Fig. 7 erläutert worden ist. Dadurch ist gewährleistet, dass selbst bei hoher Querbelastung nicht die Gefahr besteht, dass der Arbeitsteil 7c vom Einspannteil 2c abgeschert oder der Arbeitsteil 7c abgebrochen wird.

Dieses Werkzeug 1c ist ein Gewindefräswerkzeug, das insbesondere bei der Hartbearbeitung und bei der Bearbeitung von schwer zerspanbaren Materialen eingesetzt wird. Es kann vorteithaft als Mikrofräser oder bei großen Gewindetiefen eingesetzt werden, beispielsweise wenn das Längen/Durchmesser-Verhältnis einen Wert von etwa 3 überschreitet. Der zähe Werkstoff verhindert einen Bruch durch das entstehende Biegemoment beim Gewiridefräsen. Der verschleißfeste Arbeitsteil 7c ist für die Standzeit des Werkzeuges 1 c maßgebend.

Der Fräser 1d nach Fig. 5 ist im Wesentlichen gleich ausgebildet wie die Ausführungsform nach Fig. 4. Lediglich der Arbeitsteil 7d hat außer dem Schneidzahn 14d einen zweiten in einer Radialebene liegenden Schneidzahn 19. Er hat einen kleineren Durchmesser als der Schneidzahn 14d. Die vordere Zahnflanke 20 des Schneidzahnes 19 schließt an die rückwärtige Zahnflanke 16d des Schneidzahnes 14d an. Der Übergangsbereich (Linie 10d) zwischen dem zähen und dem verschleißfesten Werkstoff liegt in einem verstärkten Bereich des Werkszeuges 1 d. Im Ausführungsbeispiel erfolgt dieser Übergang in Höhe des Schneidzahnes 19.

Der Einspannteil 2d hat wie die Gewindeformer nach den Fig. 1 bis 3 den Schaft 3d, den Zwischenabschnitt 5d und den Halsabschnitt 6d. Der Härteverlauf über die Länge des Werkzeuges 1d entspricht dem Verlauf bei den vorigen Werkzeugen (Fig. 7).

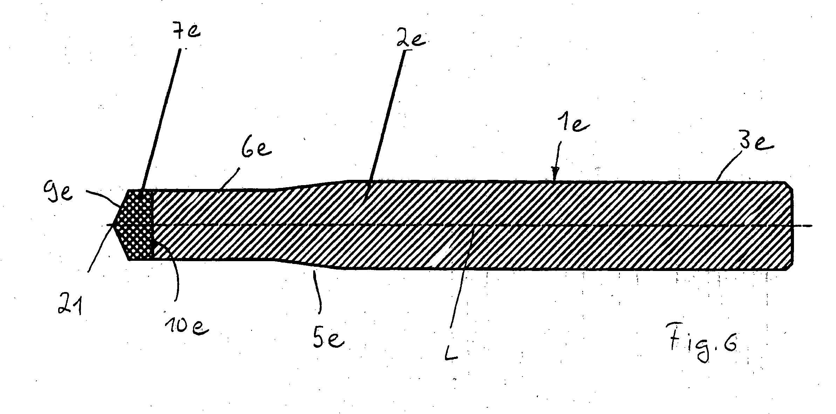

Das Werkzeug 1e gemäß Fig. 6 ist als Bohrer ausgebildet, dessen Einspannteil 2e gleich ausgebildet wie die Einspannteile 2c und 2d der Werkzeuge nach den Fig. 4 und 5. Der Arbeitsteil 7e besteht aus dem verschleißfesten Werkstoff und hat eine Bohrerspitze 21, die in der Längsachse L des Werkzeuges 1e liegt. Der Einspannteil 2e besteht ebenfalls aus dem Schaft 3e, dem Zwischenabschnitt 5e und dem Halsabschnitt 6e. Der Übergang (Linie 10e) zwischen dem zähen und dem verschleißfesten Werkstoff erfolgt über eine axiale Erstreckung, wie anhand der Fig. 1 und 7 erläutert ist. Der Bohrer 1e eignet sich speziell zur Herstellung tiefer Borungen. Der Bohrer 1e kann als Vollhartmetallbohrer mit kleinem Durchmesser von zum Beispiel unter 1 mm eingesetzt werden, da durch die beschriebene Ausbildung mit dem Arbeitsteil 7e aus verschleißfestem Werkstoff und seiner einstückigen Ausbildung mit dem Einspannteil 2e aus zähem Werkstoff eine hohe Verschleißfestigkeit und eine einwandfreie Aufnahme von Biegekräften sichergestellt sind.

Selbstverständlich können die in den Fig. 1 bis 6 beschriebenen Werkzeuge beliebig andere Abmessungen und Querschnittsformen aufweisen. Wesentlich ist, dass der Arbeitsteil aus verschleißfestem und der Einspannteil aus zähem Werkstoff bestehen.

Alle beschriebenen Werkzeuge 1, 1 a bis 1 e haben im Übergangsbereich 10 einen Härteverlauf, wie er in Fig. 7 dargestellt ist. Der Übergang zwischen dem verschleißfesten Werkstoff und dem zähen Werkstoff erfolgt über einen axialen Bereich, in dem die Konzentration des harten Werkstoffes abnimmt, während die Konzentration des zähen Werkstoffes zunimmt, so dass die Gefahr einer Abscherung oder eines Bruches des Arbeitsteiles nicht besteht, selbst wenn das Längen/Durchmesser-Verhältnis groß ist, beispielsweise größer etwa 3.

Dem an der Trennebene 10, 10c bis 10e ausgebildeten Übergangsbereich zwischen dem harten und dem verschleißfesten Werkstoff des Arbeitsteils und dem zähen, bruchresistenten Werkstoff des Einspannteiles kommt besondere Bedeutung hinsichtlich der radialen Belastbarkeit des Kompositmaterials zu. Die beiden unterschiedlichen Werkstoffe sind jeweils in der beschriebenen Weise Hartmetalle in Form von Wolframcarbid. Eine gute Durchmischung der verschiedenen Korngrößenanteile der beiden Hartmetallbereiche in der Diffusionszone sorgt für einen kontinuierlichen Übergang der Eigenschaften der beiden unterschiedlichen Hartmetallwerkstoffe. So nimmt die Verschleißfestigkeit zur Werkzeugspitze hin zu und die Zähigkeit ab. Diese Änderung erfolgt nicht in einem abrupten Sprung, sondern in einem kontinuierlichen Übergang. Dieser kontinuierliche Übergang führt zu einer maximalen radialen Belastbarkeit des Kompositmaterials. Die Ausdehnung dieses Übergangsbereiches in Achsrichtung des Werkzeuges kann durch geeignete Wahl der Parameter Zeit und Temperatur beim Sintern des Kompositmaterials beeinflusst werden.

Der Sinterprozess findet in einem Temperaturbereich zwischen etwa 1.400 und 1.550 °C statt. Die Haltezeit beim Sintern liegt zwischen etwa 0,5 und 1,5 Stunden, abhängig von der Größe der Rohlinge und ihrer Zusammensetzung.

Das bei beiden unterschiedlichen Werkstoffen verwendete Kobalt bildet das Bindemittel für die Wolframcarbidteilchen und liegt während des Sinterns in flüssiger Form vor. Der für den Arbeitsteil einerseits sowie für den Einspannteil verwendete Hartmetallwerkstoff liegt in Pulverform vor. Das flüssige Kobalt diffundiert an der Grenzfläche dieser beiden unterschiedlichen Hartmetallpulvern. Kobalt mit allen darin gelösten Zusatzstoffen ist zu starken Diffusionsbewegungen fähig. Insbesondere werden die Durchmesser kleiner Hartstoffkörner in die Diffusionsvorgänge einbezogen. Die im Durchmesser größeren Hartstoffkörner sind von diesen Diffusionsbewegungen weniger stark betroffen. Durch Variation der Sintertemperatur können die Diffusionsvorgänge, d.h. die Diffusionswege, gezielt beeinflusst werden. Der Verlauf der Härte in dem Übergangsbereich (Fig. 7) veranschaulicht die veränderten Gefügeeigenschaften im Übergangsbereich.

Die Zusammensetzung des Komposithartmetalls ist durch einen unterschiedlichen Kobaltgehalt im Bereich des Arbeitsteiles sowie des Einspannteiles sowie durch unterschiedliche Korngröße der Wolframcarbidkörner gekennzeichnet.

Der Kobaltgehalt im Bereich des Arbeitsteils liegt zwischen etwa 8 und 12 Gew.-% und im Bereich des Einspannteiles zwischen etwa 12 und 16 Gew.-%. Die Korngröße der Wolframcarbidteile liegt im Bereich des Arbeitsteiles bei etwa 0,2 bis etwa 0,5 µm, also im Ultrafeinstbereich, und im Bereich des Einspannteiles bei etwa 0,8 bis etwa 1,3 µm, also im Feinbereich. Selbstverständlich können vereinzelte Körner im Bereich des Einspannteiles auch einen größeren Durchmesser haben.

Fig. 11 zeigt die Korngrößenverteilung von Wolframcarbid über die Länge des Werkzeuges.

Die Kurve 22 zeigt die Verteilung der Wolframcarbidteilchen mit einem Korngrößendurchmesser zwischen 0,2 und 0,8 µm. Im Bereich des Arbeitsteiles haben die Wolframcarbidteilchen eine Korngröße, die in diesem Bereich liegt. In der Übergangszone nimmt der Anteil von Wolframcarbid mit dieser Korngröße ab, bis Wolframcarbidteilchen mit einem solchen Korndurchmesser nicht mehr vorhanden sind. Dieser Übergangsbereich erstreckt sich im Beispielsfall zwischen etwa 6 mm und 15 mm, d.h. über einen Längenbereich von etwa 9 mm.

Der Kurvenverlauf 23 ergibt sich, wenn die Sintertemperatur höher ist als beim Kurvenverlauf 22. Hier erstreckt sich der Übergangsbereich beispielhaft von etwa 2 mm bis zu etwa 18 mm. Diese Übergangszone ist somit wesentlich länger als beim Kurvenverlauf 22. Dies zeigt, dass durch eine höhere Sintertemperatur der Übergangsbereich zwischen dem harten und verschleißfesten Hartmetallwerkstoff und dem zähen, bruchresistenten Hartmetallwerkstoff wesentlich vergrößert werden kann.

Weiter ergibt sich aus dem Diagramm nach Fig. 11, dass im Bereich des Arbeitsteils des Werkzeuges der Anteil von Wolframcarbid mit einem Korngrößendurchmesser von etwa 0,2 bis etwa 0,5 µm bei 100 % liegt, während der Anteil von Wolframcarbidteilchen mit Korngrößendurchmesser zwischenetwa 0,8 bis etwa 1,3 µm (Kurven 24 und 25) bei 0 % liegt.

Die Kurve 24 zeigt, dass die Veränderung der Korngrößenverteilung von Wolframcarbidteilchen mit Korngrößendurchmessern zwischen etwa 0,8 bis etwa 1,3 µm in einem wesentlich kleineren axialen Bereich erfolgt als bei den Wolframcarbidteilchen mit kleinem Korngrößendurchmesser (Kurve 22 und 23). Die Kurve 24 zeigt, dass der Anteil der Wolframcarbidteilchen in diesem Korngrößendurchmesserbereich ab etwa 9 mm von 0% aus bis etwa 12 mm auf 100 % ansteigt. Der Übergangsbereich erstreckt sich somit nur etwa über 3 mm Länge.

Die Kurve 25 gibt die Verhältnisse an, wenn die Sintertemperatur höher ist. Dann beginnt der Übergang von 0 % auf 100 % bei etwa 8 mm und endet bei etwa 14 mm. Dementsprechend beträgt die axiale Länge dieses Übergangsbereiches etwa 5 mm. Auch bei diesen größeren Korngrößen zeigt sich, dass mit höherer Sintertemperatur die Übergangszone aufgrund der größeren Diffusionswege vergrößert wird.

Im Vergleich zu den kleinen Korngrößen (Kurven 22 und 23) erfolgt die Konzentrationsänderung der größeren Korngrößen über einen wesentlich kleineren axialen Bereich des Werkzeuges.

Ähnliche Verhältnisse ergeben sich, wenn die Haltezeit beim Sintern variiert wird. Je länger die Haltezeit beim Sintervorgang ist, desto größer sind die Diffusionswege und desto breiter kann der Übergangsbereich zwischen den beiden Hartmetallwerkstoffen eingestellt werden.

In der beschriebenen Weise ist es möglich, durch eine gezielte Wärmebehandlung die axiale Breite des Übergangsbereiches gezielt einzustellen. Wie das Ausführungsbeispiel gemäß Fig. 11 zeigt, kann sich der Übergangsbereich über eine beträchtliche axiale Länge erstrecken. Für die kleinen Korngrößen kann die axiale Länge des Übergangsbereiches beispielsweise 16 mm (Kurve 23) betragen.

## Patentansprüche

1. Werkzeug zur Bearbeitung von Werkstücken mit einem Einspanriteil und einem Arbeitsteil, die mindestens teilweise aus einem verschleißfesten Werkstoff und aus einem zähen Werkstoff bestehen, wobei beide Werkstoffe Wolframcarbid enthalten,
**dadurch gekennzeichnet, dass** der Arbeitsteil (11, 11b; 7c bis 7e, 7h) aus dem verschleißfesten Material besteht, dessen Wolframcarbid eine Korngröße aufweist, die im Bereich zwischen etwa 0,2 bis etwa 0,5 µm liegt, dass das Wolframcarbid im Einspannteil (2, 2a, 2c bis 2e) eine Korngröße im Bereich zwischen etwa 0,8 bis etwa 1,3 µm aufweist, dass in einem Übergangsbereich (10, 10c bis 10e) zwischen dem Arbeitsteil (11, 11b; 7c bis 7e, 7h) und dem Einspannteil (2, 2a, 2c bis 2e) der Anteil des verschleißfesten Wolframcarbids in Richtung auf den Einspannteil bis auf 0 und der Anteil des zähen Wolframcarbids in Richtung auf den Arbeitsteil bis auf 0 abnimmt, und dass sich das Mischungsverhältnis zwischen verschleißfestem und zähem Wolframcarbid im Übergangsbereich (10, 10c bis 10e) etwa stetig ändert.

2. Werkzeug nach Anspruch 1,
**dadurch gekennzeichnet, dass** die Härte des Werkzeuges (1, 1 a bis 1 h) im Übergangsbereich (10, 10c, 10d) vom verschleißfesten in den zähen Werkstoffbereich über einen axialen Bereich abnimmt.

3. Werkzeug nach Anspruch 1 oder 2,
**dadurch gekennzeichnet, dass** der Übergangsbereich (10, 10c, 10d, 10e) vom verschleißfesten in den zähen Werkstoffbereich in einem im Querschnitt verstärkten Bereich vorgesehen ist.

4. Werkzeug nach einem der Ansprüche 1 bis 3,
**dadurch gekennzeichnet, dass** dem Wolframcarbid im Arbeitsteil (11, 11 b; 7c bis 7e, 7h) Kobalt in einem Bereich zwischen etwa 8 und etwa 12 Gew.-% zugemischt ist.

5. Werkzeug nach einem der Ansprüche 1 bis 4,
**dadurch gekennzeichnet, dass** dem Wolframcarbid im Einspannteil (2, 2a, 2c bis 2e) Kobalt in einem Bereich zwischen etwa 12 und etwa 16 Gew.-% zugemischt ist.

6. Werkzeug nach einem der Ansprüche 1 bis 5,
**dadurch gekennzeichnet, dass** die Veränderung der Korngröße des verschleißfesten Werkstoffes über eine größere axiale Länge des Werkzeuges erfolgt als die Veränderung der Korngröße des zähen Werkstoffes.

7. Werkzeug nach einem der Ansprüche 1 bis 6,
**dadurch gekennzeichnet, dass** das Werkzeug ein Gewindeförmer oder ein Fräser/Gewindefräser oder ein Bohrer ist.

8. Werkzeug nach einem der Ansprüche 1 bis 7,
**dadurch gekennzeichnet, dass** es mindestens einen Kühlkanal (12, 12b, 12f bis 12h) aufweist.

9. Werkzeug nach einem der Ansprüche 1 bis 8,
**dadurch gekennzeichnet, dass** der Arbeitsteil (11, 11b; 7c bis 7e) über seine axiale Erstreckung etwa gleiche Härte aufweist.

10. Werkzeug nach einem der Ansprüche 1 bis 9,
**dadurch gekennzeichnet, dass** der Einspannteil (2, 2a, 2c bis 2e) über seine axiale Länge im Wesentlichen etwa gleiche Härte aufweist.

## Claims

1. A tool for machining workpieces with a clamping part and a working part that consist at least partially of a wear-resistant material and of a tough material, wherein both materials contain tungsten carbide,
**characterized in that** the working part (11, 11b; 7c-7e, 7h) consists of the wear-resistant material, the tungsten carbide of which has a grain size in the range between about 0.2 and about 0.5 µm, **in that** the tungsten carbide in the clamping part (2, 2a, 2c-2e) has a grain size in the range between about 0.8 and about 1.3 µm, **in that** the proportion of wear-resistant tungsten carbide in a transition zone (10, 10c-10e) between the working part (11, 11b; 7c-7e, 7h) and the clamping part (2, 2a, 2c-2e) decreases to 0 in the direction of the clamping part and the proportion of tough tungsten carbide decreases to 0 in the direction of the working part, and **in that** the mixing ratio between wear-resistant and tough tungsten carbide changes about steadily in the transition zone (10,
10c-10e).

2. The tool according to Claim 1,
**characterized in that** the hardness of the tool (1, 1a-1h) decreases over an axial region in the transition zone (10, 10c, 10d) from the wear-resistant to the tough material region.

3. The tool according to Claim 1 or 2,
**characterized in that** the transition zone (10, 10c, 10d, 10e) from the wear-resistant to the tough material region is arranged in a region of increased cross section.

4. The tool according to one of Claims 1-3,
**characterized in that** cobalt is admixed to the tungsten carbide in the working part (11, 11b; 7c-7e,
7h) in an amount between about 8 and about 12 wt.%.

5. The tool according to one of Claims 1-4,
**characterized in that** cobalt is admixed to the tungsten carbide in the clamping part (2, 2a, 2c-2e) in an amount between about 12 and about 16 wt.%.

6. The tool according to one of Claims 1-5,
**characterized in that** the change of the grain size of the wear-resistant material takes place over a greater axial length of the tool than the change of the grain size of the tough material.

7. The tool according to one of Claims 1-6,
**characterized in that** the tool is a thread former or a milling cutter/thread milling cutter or a drill bit.

8. The tool according to one of Claims 1-7,
**characterized in that** it features at least one cooling channel (12, 12b, 12f-12h).

9. The tool according to one of Claims 1-8,
**characterized in that** the working part (11, 11b; 7c-7e) has approximately the same hardness over its axial extent.

10. The tool according to one of Claims 1-9, **characterized in that** the clamping part (2, 2a, 2c-2e) in essence has approximately the same hardness over its axial length.

## Revendications

1. Outil pour usiner des pièces avec une partie de serrage et une partie de travail qui sont composés au moins en partie d'un matériau résistant à l'usure et d'un matériau ductile, les deux matériaux contenant du carbure de tungstène,
**caractérisé en ce que** la partie de travail (11, 11b; 7c à 7e, 7h) est composée d'un matériau résistant à l'usure dont le carbure de tungstène présente une granulométrie qui se situe dans une gamme variant entre environ 0,2 à environ 0,5 µm, **en ce que** le carbure de tungstène présente dans la partie de serrage (2, 2a, 2c à 2e) une granulométrie dans une gamme variant entre environ 0,8 à environ 1,3 µm, **en ce que** dans une zone transitoire (10, 10c à 10e) entre la partie de travail (11, 11b; 7c à 7e, 7h) et la partie de serrage (2, 2a, 2c à 2e), la part de carbure de tungstène résistant à l'usure diminue jusqu'à 0 dans la direction de la partie de serrage et la part de carbure de tungstène ductile diminue jusqu'à 0 dans la direction de la partie de travail et **en ce que** la proportion de mélange entre le carbure de tungstène résistant à l'usure et le carbure de tungstène ductile varie à peu près de façon permanente dans la zone transitoire (10, 10c à 10e).

2. Outil selon la revendication 1,
**caractérisé en ce que** la dureté de l'outil (1, la à 1h) dans la zone transitoire (10, 10c, 10d) diminue sur une zone axiale de la zone de matériau résistant à l'usure dans la zone de matériau ductile.

3. Outil selon la revendication 1 ou 2,
**caractérisé en ce que** la zone transitoire (10, 10c, 10d, 10e) est prévue dans une zone renforcée en section de la zone de matériau résistant à l'usure dans la zone de matériau ductile.

4. Outil selon l'une quelconque des revendications 1 à 3,
**caractérisé en ce qu'**au carbure de tungstène dans la partie de travail (11, 11b; 7c à 7e, 7h) on ajoute du cobalt dans une gamme variant entre environ 8 et environ 12% /poids.

5. Outil selon l'une quelconque des revendications 1 à 4,
**caractérisé en ce qu'**au carbure de tungstène dans la partie de serrage (2, 2a, 2c à 2e), on ajoute du cobalt dans une gamme variant entre environ 12 et environ 16 % /poids.

6. Outil selon l'une quelconque des revendications 1 à 5,
**caractérisé en ce que** la modification de la granulométrie du matériau résistant à l'usure a lieu sur une longueur axiale de l'outil plus grande que la modification de la granulométrie du matériau ductile.

7. Outil selon l'une quelconque des revendications 1 à 6,
**caractérisé en ce que** l'outil est un taraud travaillant par refoulement ou une fraise/fraise à fileter ou un foret.

8. Outil selon l'une quelconque des revendications 1 à 7,
**caractérisé en ce qu'**il comporte au moins un conduit de refroidissement (12, 12b, 12f à 12h).

9. Outil selon l'une quelconque des revendications 1 à 8,
**caractérisé en ce que** la partie travail (11, 11b; 7c à 7e) présente sur son extension axiale à peu près la même dureté.

10. Outil selon l'une quelconque des revendications 1 à 9,
**caractérisé en ce que** la partie de serrage (2, 2a, 2c à 2e) présente sur sa longueur axiale pour l'essentiel à peu près la même dureté.
